# EUROPEAN PATENT APPLICATION

(11) **EP 3 936 835 A1**
(43) Date of publication of application: **12.01.2022**
(21) Application number: 20425025.2
(22) Date of filing: 07.07.2020
(51) Int. Cl.: G01F 25/00, F04B 15/02, G01F 1/00, E04G 21/04, B60P 3/00

(54) **METHOD AND MEASUREMENT KIT FOR DETERMINING THE VOLUME OF A VISCOUS LIQUID**

(71) Applicant: Tecno S.r.l., 20149 Milano (IT)
(72) Inventor: Beneduce, Mauro, 80048 Sant'Anastasia (Napoli) (IT); Camerlingo, Giuseppe, 83053 Sant'Andrea di Conza (Avellino) (IT); Lombardi, Giovanni, 80121 Napoli (IT)
(74) Representative: Tansini, Elio Fabrizio

(57) **Abstract**

Method for weighing viscous liquids in a system (1) for transporting the viscous liquid, preferably for transporting bitumen (2), comprising the steps of preparing and installing a measuring kit (3) in the system (1) configured to acquire and store mechanical parameters of a pump (4) configured to aspirate or push liquid from a container (5) of the system (1), performing a calibration of the pump (4) quantifying a flow rate (P) of viscous liquid transported by said system (1) as a function of a cylinder capacity of the pump (4) obtained from the calibration and the mechanical parameters measured during a use of the system (1).

## Description

The object of the present invention is a measuring method and a kit for weighing viscous liquids in systems.

The present invention relates, preferably but not limitedly, to weighing viscous liquids such as bitumen for the production of bituminous conglomerate. In other words, the present invention finds application for the transport of different types of material, with particular attention to the transport of bitumen.

To date, several methods are known for quantifying viscous material which exploit devices such as load cells which, instant by instant, allow to know the quantity of liquid present in the system, i.e., in the mixing container. Other known methods include the use of flow meters.

Generally, in systems for the transport of such viscous liquids, a volumetric pump is used which exploits the variation in volume in a chamber to cause an aspiration or a push on a fluid. This type of pump is for example widely used to pump lubricating oil into motor vehicles and generally in all applications where the fluid is viscous. The use of the above load cells leads to high structural complexity as well as high maintenance costs. Similarly, flow meters also have a high cost.

Furthermore, the systems described above exhibit high variability in the results obtained in consideration of the environmental parameters of the environment in which they are installed (unpredictable).

In other words, a disadvantage of the known solutions is due to the high system costs resulting from both installation and possible system downtime due to maintenance of the devices described above.

The technical task of the present invention is therefore to provide a measuring method and a kit for weighing viscous liquids which are able to overcome the drawbacks arisen from the known art mentioned above.

An object of the present invention is to provide a measuring method and a kit for weighing viscous liquids which allow to reduce system costs and system downtime compared to traditional solutions.

A further object of the present invention is to provide a measuring method and a kit for weighing viscous liquids which allow to obtain a precise weighing of the viscous liquids transported.

The specified technical task and the specified aims are substantially achieved by a measuring method and a kit for weighing viscous liquids, comprising the technical specifications set out in one or more of the appended claims. The dependent claims correspond to possible embodiments of the invention.

In particular, the present invention includes providing a method for weighing viscous liquids in a system for transporting the viscous liquid, preferably for transporting bitumen, comprising the steps of preparing and installing a measuring kit configured to acquire and store mechanical parameters of a pump configured to aspirate or push liquid from a container of the system and perform a calibration of the pump. This calibration is performed by acquiring the mechanical parameters as a function of a filling condition of the container and determining a cylinder capacity of the pump according to the mechanical parameters acquired. Finally, the method involves quantifying a flow rate of viscous liquid transported by the system according to the cylinder capacity and the mechanical parameters measured during a use of the system. Advantageously, the use of the measuring kit allows to effectively define the cylinder capacity of the pump (i.e. of the system) which allows to not have to exploit the known devices. In addition, the measuring kit is easy to install, allowing a reduction in both installation and maintenance costs. Advantageously, the reading of the mechanical parameters allows, once the characteristic curve of the pump has been defined, to obtain precise results suitable for knowing the actual flow rate of liquid transported by the system.

Preferably, the step of acquiring the mechanical parameters is accomplished by acquiring the number of revolutions of a pump impeller. Furthermore, the present invention involves providing a measuring kit for weighing viscous liquids in a viscous liquid transport system, preferably for the transport of bitumen. The measuring kit comprises a revolution counter device, installed or installable on the system, configured to acquire mechanical parameters of a pump configured to aspirate or push liquid from a system container.

The measuring kit further comprises a recording unit configured to store the mechanical parameters acquired by the revolution counter device and a processing unit configured to realize an above method.

Further characteristics and advantages of the present invention will become more apparent from the description of an exemplary, but not exclusive, and therefore non-limiting preferred embodiment of a measuring method and a kit for weighing viscous liquids.

Such description will be set out hereinafter with reference to the accompanying drawings given only for illustrative and, therefore, non-limiting purpose, in which:

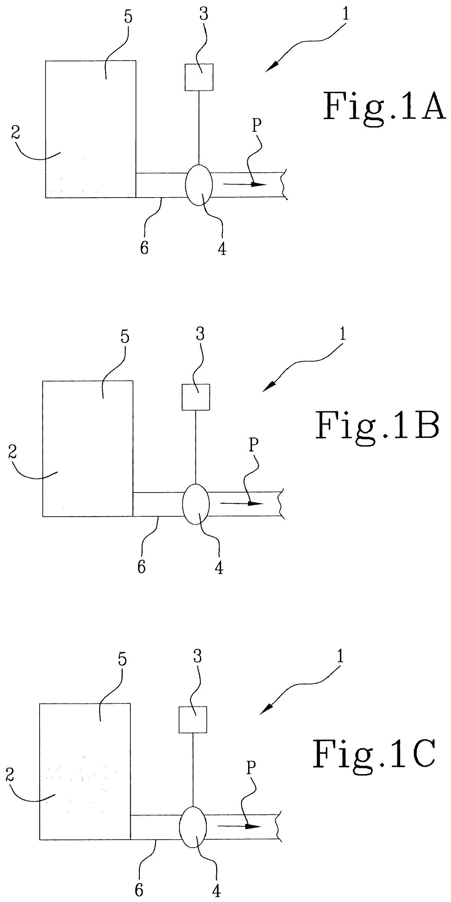

- Figures 1A-1C are a schematic representation of different steps of the method object of the present invention.

With reference to the accompanying figures, the number 1 globally indicates a system whose actual flow rate "P" is to be known during a use of the same.

The present invention relates to a method for weighing viscous liquids in a system 1 such as those depicted in the accompanying figures.

The present invention relates, preferably but not limitedly, to weighing systems 1 for transporting bitumen 2. In other words, the present invention finds application for the transport of different types of viscous liquids (such as food products) with particular attention to the transport of bitumen 2. The method involves providing and installing a measuring kit 3 configured to acquire and store mechanical parameters of a pump 4 configured to aspirate or push liquid from a container 5 of the system 1. The term container 5 is intended to refer to constructions, such as silos, used to store the viscous liquid.

The pump 4 is thus configured to draw the viscous liquid from a container 5 (i.e., a storage tank) to a use tank of the liquid. The pump 4 is of a volumetric type and uses the change in volume in a chamber to cause an aspiration or a push of the fluid. This type of pump 4 is widely used to pump lubricating oil into motor vehicles, or to pump oil from a hydraulic circuit of an earth moving machine.

Preferably, the term measuring kit 3 is intended as a kit capable of acquiring and storing with a rapid frequency (e.g., up to three or four times per second) the mechanical parameters of the pump 4 such as the number of revolutions of an impeller of the pump itself.

The method also involves performing a calibration of the pump 4. In other words, the method involves performing a mechanical characterization of the pump 4 which moves the viscous liquid through a conduit 6 of the system 1.

The calibration step involves acquiring the mechanical parameters according to a filling condition of the container 5. Filling condition of the container 5 is intended as a specific amount of liquid contained inside the container 5 itself. That is, the acquisition step is accomplished by acquiring the mechanical parameters relative to different known amounts of viscous liquid present inside the container 5.

Preferably, the acquisition step may be carried out for a filling condition equal to 50% of the liquid contained in the container 5 (i.e., a filling condition in which the container 5 is filled to half of its maximum capacity). Preferably, the acquisition step may be carried out for a filling condition equal to 75% of the liquid contained in the container 5.

Preferably, the acquisition step may be carried out for a filling condition equal to 100% of the liquid contained in the container 5 (i.e., a filling condition equal to the maximum capacity of the container 5).

Other filling conditions are possible as long as the amount of liquid (i.e., bitumen 2) is known.

Preferably, the acquisition step can be accomplished by measuring an emptying time of the container 5. That is, during the movement of the known amount of viscous liquid, the total time it takes the pump 4 to empty the container 5 is measured.

Preferably, the acquisition step is accomplished by acquiring at least one mechanical parameter per second during the emptying times. Even more preferably, the acquisition step is accomplished by acquiring three or four mechanical parameters per second.

The calibration step also involves determining a cylinder capacity of the pump 4 based on the acquired mechanical parameters. That is, the calibration step involves, based on the number of revolutions of an impeller of the pump 4 measured, identifying how much liquid is moved for each individual revolution. Therefore, the step of determining the cylinder capacity of the pump 4 involves identifying a ratio between the amount of liquid and the number of revolutions of the impeller of the pump 4.

That is, once the total number of revolutions the pump 4 uses to pump the known amount of liquid (for any load condition) is measured, the amount of liquid the pump 4 moves for a single revolution of the impeller is obtained. For example, if the container 5 (i.e., the silo) contains 100 I of liquid and the pump 4 (i.e., the impeller of the pump 4) uses 100 revolutions to completely empty the container 5, a cylinder capacity of 1 I/revolution would result.

Preferably, the step of determining the flow rate "P" can be accomplished by evaluating an average value of the mechanical parameters acquired during the emptying time. That is, given a known amount of viscous liquid to be handled, an average of the number of revolutions measured by the measuring kit 3 (which can be acquired three or four times per second) is achieved.

Preferably, the step of determining the flow rate "P" can be achieved by comparing the results obtained from the acquisition step (for example, the average value of the number of revolutions obtained from the acquisition step) with those of a traditional system in order to verify that the flow rate "P" is the same. Advantageously, this solution allows for a simplified calibration which allows to define a volume of liquid handled for a single revolution of the pump.

That is, from the calibration step it is possible, by moving a known amount of viscous liquid and counting the number of revolutions, to obtain the total amount of liquid moved, the total number of revolutions of the impeller of the pump 4 and the ratio between the amount of liquid moved and the total revolutions (thus obtaining a ratio defined by the amount of liquid moved per single revolution).

At this point, the method advantageously allows to quantify a flow rate "P" of viscous liquid transported by the system 1 according to the flow rate "P" determined during calibration and the mechanical parameters measured during a use of the system 1. That is, knowing the number of revolutions performed by the impeller of the pump 4, it is possible to calculate the total volume of material handled during the use of the system 1. Advantageously, the use of the measuring kit 3 allows to effectively define the cylinder capacity of the pump 4 so that during a use of the system 1 it is not necessary to exploit the known devices. In addition, the measuring kit 3 is easy to install, allowing a reduction in both installation and maintenance costs.

Advantageously, the reading of the mechanical parameters allows, once the cylinder capacity of the pump 4 has been defined, to obtain precise results suitable for knowing the actual flow rate "P" transported by the system 1.

The present invention further relates to a measuring kit 3 for weighing viscous liquids in a system 1 for transporting viscous liquid, preferably for transporting bitumen 2.

The measuring kit 3 comprises a revolution counter device, installed or installable on the system 1, configured to acquire the mechanical parameters of the pump 4.

The revolution counter device is preferably magnetic in type and is configured to measure the number of revolutions of an impeller of the pump 4. In particular, the revolution counter device is configured to detect the passage of a magnet applied or applicable to the impeller of the pump 4.

The measuring kit 3 further comprises a recording unit configured to store the mechanical parameters acquired by the revolution counter device. The measuring kit 3 further comprises a processing unit configured to perform a method such as the one described above.

Preferably, the processing unit is further configured to define a database of acquired mechanical parameters based on the specific filling conditions of the container 5.

Advantageously, the method and the measuring kit 3 described above allow to provide the flow rate "P" of liquid transported by the system without the continuous use of load cells.

Advantageously, this solution entails a reduction in costs and system downtime compared to the traditional solutions.

## Claims

1. Method for weighing viscous liquids in a system (1) for transporting the viscous liquid, preferably for transporting bitumen (2), comprising:
- preparing and installing a measuring kit (3) in said system (1) configured to acquire and store mechanical parameters of a pump (4) configured to aspirate or push liquid from a container (5) of the system (1);
- performing a calibration of the pump (4) comprising the sub-steps of:
- acquiring said mechanical parameters according to a filling condition of said container (5);
- determining a cylinder capacity of the pump (4) as a function of said acquired mechanical parameters;
- quantifying a flow rate (P) of viscous liquid transported by said system (1) according to said cylinder capacity of the pump (4) and the mechanical parameters measured during a use of said system (1).

2. Method according to claim 1, wherein said step of acquiring the mechanical parameters is accomplished by acquiring the number of revolutions of an impeller of the pump (4).

3. Method according to claim 2, wherein said step of determining the pump cylinder capacity involves identifying a ratio between the amount of liquid and the number of revolutions.

4. Method according to one or more of the preceding claims, wherein said acquisition step is carried out by measuring an emptying time of the container (5).

5. Method according to claim 4, wherein said acquisition step is accomplished by acquiring at least one mechanical parameter per second during said emptying times, preferably three or four mechanical parameters per second.

6. Method according to claim 4 or 5, wherein said step of determining the cylinder capacity of the pump (4) is carried out by evaluating an average value of the mechanical parameters acquired during the emptying time.

7. Method according to one or more of claims 4-6, wherein said step of determining the cylinder capacity of the pump (4) is carried out by comparing the results obtained from the acquisition step with those of a traditional system.

8. Method according to one or more of the preceding claims, wherein said acquisition step is carried out by acquiring the mechanical parameters relating to different known quantities of viscous liquid present in the container (5), preferably said acquisition step being carried out for filling conditions equal to 50%, 75% and/or 100% of the liquid contained in the container (5).

9. Measuring kit (3) for weighing viscous liquids in a system (1) for transporting the viscous liquid, preferably for transporting bitumen (2), comprising:
- a revolution counter device, installed or installable on said system (1) configured to acquire mechanical parameters of a pump (4) configured to aspirate or push liquid from a container (5) of the system (1);
- a recording unit configured to store said mechanical parameters acquired by the revolution counter device;
- a processing unit configured to perform a method of one or more of the preceding claims.

10. Measuring kit (3) according to claim 9, wherein said revolution counter device is magnetic in type and is configured to measure the number of revolutions of a pump impeller, said revolution counter device detecting the passage of a magnet applied or applicable to the pump impeller.

11. Measuring kit (3) according to claim 9 or 10, wherein said processing unit is further configured to define a database of said acquired mechanical parameters based on the specific filling conditions of the container (5).
